# DEMANDE DE BREVET EUROPEEN

(11) **EP 2 177 782 A1**
(43) Date de publication de la demande: **21.04.2010**
(21) Numéro de dépôt: 09173134.9
(22) Date de dépôt: 15.10.2009
(51) Int. Cl.: F16D 66/02, B60R 16/023

(54) **Dispositif de freinage pour véhicule, comportant un cable électrique reliant un capteur d'usure à un connecteur électrique**

(30) Priorité: 16.10.2008 FR 0857050
(71) Demandeur: Peugeot Citroën Automobiles SA, 78140 Vélizy-Villacoublay (FR)
(72) Inventeur: Labroue, Stéphane, 95110, SANNOIS (FR)

(57) **Abrégé**

Dispositif de freinage pour véhicule, comportant un câble électrique (12) reliant un capteur d'usure (10) d'une surface de friction (3) à un connecteur électrique (11), et comportant aussi un moyen de guidage (15) permettant le libre passage dudit câble électrique (12), tel que ledit câble électrique (12) comporte une butée (16) positionnée entre le moyen de guidage (15) et le connecteur électrique (11) destinée à coopérer avec ledit moyen de guidage (15) de façon à limiter le déplacement du câble électrique (12) en direction dudit capteur d'usure (10).

## Description

La présente invention concerne un dispositif de freinage pour véhicule, comportant un câble électrique reliant un capteur d'usure d'une surface de friction à un connecteur électrique, et comportant aussi un moyen de guidage permettant le libre passage dudit câble électrique.

Les freins à disques de véhicules automobiles sont pourvus en général d'un dispositif permettant d'avertir le conducteur que les garnitures de friction des freins arrivent en fin d'usure et qu'il est donc nécessaire de les remplacer. Ce dispositif comporte sur le tableau de bord un témoin d'alerte qui s'active dès que la garniture de frein est usée en fonction d'une épaisseur restante de garniture de frein déterminée.

Le témoin d'alerte est déclenché par un circuit électrique fonctionnant comme une résistance et un organe de contact isolé de la masse. L'extrémité de cet organe de contact isolé de la masse est placée à une certaine distance du support de la garniture de friction du frein. Au fur et à mesure de l'usure de la garniture, l'extrémité de l'organe de contact arrive au contact du disque qui, par frottement, enlève la partie isolante, provoquant la mise à la masse. Cette mise à la masse génère une modification de la résistance vue par le système ABS ESP et déclenche l'allumage du témoin d'alerte au tableau de bord.

La liaison entre le contact isolé de la masse, placé sur le support de garniture de friction du frein, et le circuit électrique se fait par un câble électrique. Ce câble électrique, dont l'extrémité est placée sur le support de garniture de friction du frein, transite le long de l'étrier de frein, du pivot de roue et des bras de suspension pour venir se fixer sur le circuit électrique du véhicule. Pour pouvoir suivre le déplacement de l'étrier de frein, qui coulisse en fonction de l'usure des surfaces de friction et du disque de frein par rapport au porte moyeu de roue avec lequel il présente une liaison glissière, le câble électrique doit être monté non tendu, présentant un excédent de câble électrique. Le câble électrique excédentaire peut venir en contact avec une pièce mobile, notamment contre la surface interne de la jante, qui est positionnée très proche de l'étrier de frein. Le frottement contre la jante peut blesser la gaine de protection isolante et provoquer une modification de la résistance du circuit, entraînant le déclenchement de l'allumage du voyant d'alerte d'usure des garnitures de friction des freins au tableau de bord. Cet excédent de câble électrique est normalement réparti de manière homogène le long du parcours du câble par plusieurs points de fixations intermédiaires. De telles fixations intermédiaires sont présentes dans le document DE 40 16 273 permettant un meilleur guidage du câble électrique. Mais la multiplication de ces guidages intermédiaires complique les opérations de montage, multipliant d'autant les risques d'oubli au moment du montage. Cette multiplication de guidages ne résout d'autre part que partiellement le problème puisque l'ensemble du câble électrique excédentaire peut se déplacer à travers les moyens de guidage et s'accumuler du coté de l'étrier, pouvant de nouveau venir en contact avec la surface interne de la jante.

La présente invention a notamment pour but de proposer un câble électrique permettant, avec la mise en place d'un seul dispositif de guidage, d'éviter tout contact avec les pièces mobiles présentent à proximité du câble.

A cet effet, l'invention a pour objet un dispositif de freinage pour véhicule, comportant un câble électrique reliant un capteur d'usure d'une surface de friction à un connecteur électrique, et comportant aussi un moyen de guidage permettant le libre passage dudit câble électrique, tel que ledit câble électrique comporte une butée positionnée entre le moyen de guidage et le connecteur électrique destinée à coopérer avec ledit moyen de guidage de façon à limiter le déplacement du câble électrique en direction dudit capteur d'usure. La butée est obtenue par surmoulage dudit câble électrique. Il peut être prévu aussi qu'un moyen élastique puisse être positionné en appui entre la butée et le moyen de guidage, par exemple au moyen d'un ressort. La surface de friction est logée dans un carter, ledit carter portant le moyen de guidage. Le moyen de guidage ainsi positionné est amovible, permettant la mise en place dudit câble électrique. Le moyen de guidage en coopération avec la butée, limite ainsi le déplacement du câble électrique en direction du carter contenant la surface de friction, évitant tout risque de contact entre ledit câble électrique et la surface interne de la jante positionné à proximité dudit carter.

D'autres avantages et caractéristiques techniques de la présente invention apparaitrons plus clairement à la lumière de la description qui suit en référence aux figures des dessins annexés parmi lesquelles :
- La figure 1 est une vue en perspective, partielle, d'un dispositif de freinage du type à disque, comportant un câble électrique suivant l'invention;
- La figure 2 est une vue partielle, de face, suivant l'axe principale du véhicule, du dispositif de freinage selon la figure 1, positionné en regard de la roue d'un véhicule ; et
- La figure 3 est une vue partielle, de coté, du dispositif de freinage selon la figure 1, comportant un disque de frein et des surfaces de frictions présentant un niveau d'usure faible.

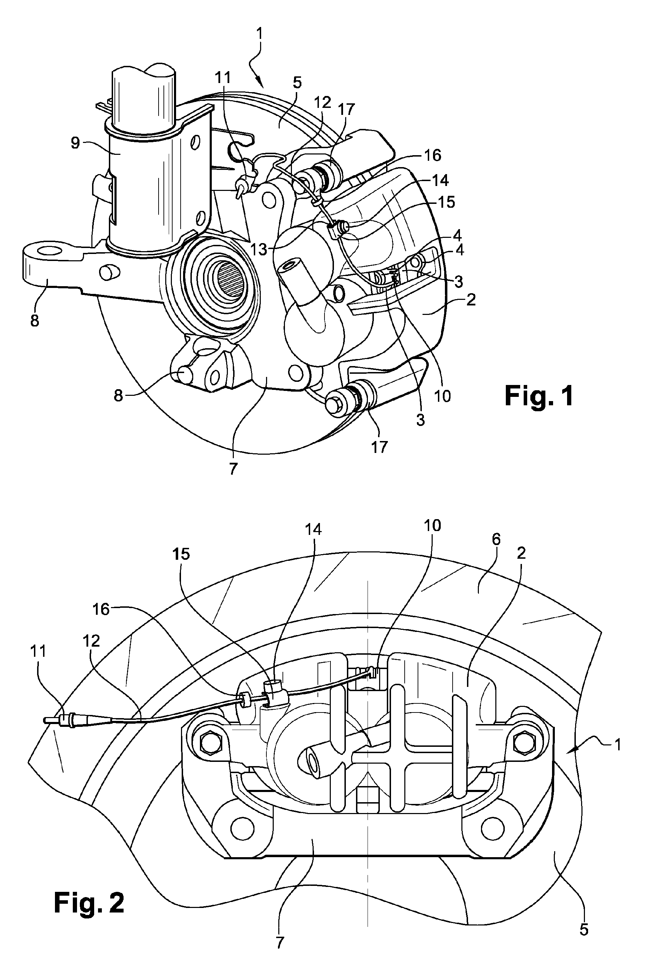

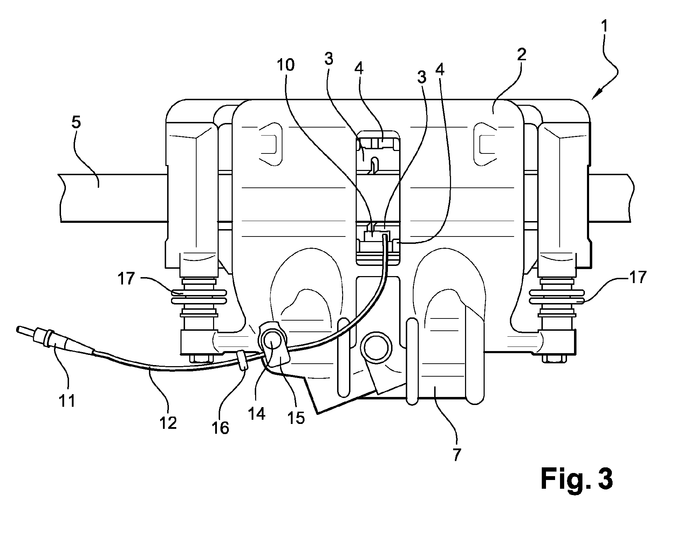

Sur les figures 1 à 3 sont représentées des vues partielles d'un dispositif de freinage 1 destiné à un véhicule automobile ou à tout autre type de véhicule présentant un dispositif de freinage à disques. Le dispositif de freinage 1 se compose d'un carter ou étrier de frein 2 dans lequel est monté deux surfaces de friction 3 fixées sur deux plaques de fixation 4, et d'un disque de frein 5 positionné entre les deux surfaces de friction 3. Le disque de frein 5 est destiné à être monté solidaire d'une roue 6. L'étrier de frein 2 est fixé au porte moyeu 7 par une liaison glissière 17 permettant un déplacement relatif du porte moyeu 7 par rapport à l'étrier de frein 2. Le porte moyeu 7 présente des points de fixation 8 permettant le montage de bras de suspension (non représentés) reliant le porte moyeu 7 la caisse du véhicule. Sur ce porte moyeu 7 est aussi fixé un combiné ressort amortisseur 9. Dans un espacement positionné dans une des deux surfaces de friction 3, à proximité de la plaque de fixation 4 correspondante, est monté un capteur d'usure 10 relié, par un câble électrique 12 à un connecteur électrique 11. Le connecteur électrique 11, destiné à être fixé sur le porte moyeu 7, est relié au circuit électrique du véhicule (non représenté). Pour guider le passage du câble électrique 12, un capuchon de protection 14, venant se fixer sur une vis de purge 13 de l'étrier de frein 2, forme une boucle 15. Lors du montage du câble électrique 12 sur l'étrier de frein 2, le capuchon de protection 14 peut se retirer de la vis de purge 13, permettant le passage du câble électrique 12 à travers la boucle 15. Ce câble électrique 12 présente une butée 16, fixée par surmoulage autour du câble électrique 12. Bien entendu, d'autres modes de réalisation peuvent être utilisés pour réaliser cette butée 16 ; celle-ci pouvant être composée de deux pièces venant encercler le câble électrique 12 et ces deux pièces pouvant être fixées par clippage, par soudage ou par tout autre moyen de collage. Cette butée 16 qui présente un diamètre supérieur au diamètre intérieur de la boucle 15 du capuchon de protection 14, sert à limiter le déplacement du câble électrique 12 en direction de l'étrier de frein 2. Cette butée 16 est positionnée entre le connecteur électrique 11 et la boucle 15 du capuchon de protection 14.

Lors de l'usure du disque de frein 5 et des deux surfaces de friction 3, l'étrier de frein 2 translate le long de la liaison glissière 17, compensant l'usure de ces trois éléments et les maintenir en contact. Le câble électrique 12 qui est guidé par la boucle 15 du capuchon de protection 14 fixé sur l'étrier de frein suit cette translation. Le câble électrique 12 présente une longueur excédentaire lui permettant de compenser la translation de l'étrier 2, tant vis-à-vis du porte moyeu 7, où vient se fixer le connecteur électrique 11, que vis-à-vis du capteur d'usure 10 solidaire de la surface de friction 3. Ainsi, cette longueur excédentaire du câble électrique 12 correspond généralement à deux fois la longueur de la liaison glissière 17. Or le câble électrique 12 risque de se déplacer de toute cette longueur excédentaire à travers la boucle 15 en direction du capteur d'usure 10, concentrant cette longueur excédentaire le long de l'étrier de frein 2, faisant une boucle risquant de venir en contact avec la surface interne de la roue 6 qui est en rotation par rapport à l'étrier de roue 2. La butée 16 est donc positionnée pour limiter le déplacement du câble électrique 12 de la longueur juste nécessaire pour compenser uniquement la translation entre l'étrier de frein 2 et le capteur d'usure 10. Le déplacement du câble électrique 12 à travers la boucle 15 en direction du connecteur électrique 11, ne posant pas de problème de contact, est laissé libre. Dans le cas où l'espacement entre la surface interne de la roue 6 et l'étrier de frein 2 est très faible, un élément de rappel élastique, tel qu'un ressort, peut être interposé entre la butée 16 du câble électrique 12 et la boucle 15 du capuchon de protection 14, permettant à la partie du câble électrique 12 positionnée le long de l'étrier de frein 2 d'être tendu en permanence.

## Revendications

1. Dispositif de freinage pour véhicule, comportant un câble électrique (12) reliant un capteur d'usure (10) d'une surface de friction (3) à un connecteur électrique (11), et comportant aussi un moyen de guidage (15) permettant le libre passage dudit câble électrique (12), **caractérisé en ce que** ledit câble électrique (12) comporte une butée (16) positionnée entre le moyen de guidage (15) et le connecteur électrique (11) destinée à coopérer avec ledit moyen de guidage (15) de façon à limiter le déplacement du câble électrique (12) en direction dudit capteur d'usure (10).

2. Dispositif de freinage suivant la revendication 1, **caractérisé en ce que** ladite butée (16) est obtenue par surmoulage dudit câble électrique (12).

3. Dispositif de freinage suivant les revendications 1 ou 2, **caractérisé en ce qu'**un moyen élastique est positionné en appui entre la butée (16) et le moyen de guidage (15).

4. Dispositif de freinage suivant la revendication 3, **caractérisé en ce** ledit moyen élastique est un ressort.

5. Dispositif de freinage suivant l'une quelconque des revendications précédentes, **caractérisé en ce que** la surface de friction (3) est logée dans un carter, le moyen de guidage (15) étant porté par ledit carter.

6. Dispositif de freinage suivant la revendication 5, **caractérisé en ce que** le moyen de guidage (15) est amovible.

7. Véhicule automobile comportant un dispositif de freinage suivant l'une quelconque des revendications précédentes.
